(19) Europäisches Patentamt / European Patent Office / Office européen des brevets

(11) **EP 1 881 404 A1**

(12) **DEMANDE DE BREVET EUROPEEN**

(43) Date de publication:
**23.01.2008 Bulletin 2008/04**

(51) Int Cl.:
*G06F 9/445* *(2006.01)*      *G06F 9/455* *(2006.01)*

(21) Numéro de dépôt: **06291183.9**

(22) Date de dépôt: **20.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(71) Demandeur: **GEMPLUS**
**13420 Gémenos (FR)**

(72) Inventeurs:
 • **Gonzalvo, Benoit**
  **13420 Gemenos (FR)**
 • **Fournier, Jacques Jean-Alain**
  **13008 Marseille (FR)**

(54) **Procédé de protection dynamique des données lors de l'exécution d'un code logiciel en langage intermédiaire dans un appareil numérique**

(57)    L'invention concerne un procédé de protection des données d'une application compilée en code intermédiaire prévu pour s'exécuter sur un appareil numérique muni d'une machine virtuelle gérant l'exécution du code à travers une pile d'exécution définissant au moins un cadre de pile (10) correspondant à une méthode appelée lors de l'exécution du code, caractérisé en ce qu'il comprend l'application d'un mode d'exécution sécurisé du code, comprenant :
- la détermination d'au moins une donnée de contrôle globale (gck) associée à chaque cadre de pile et,
- à chaque fois qu'une donnée (a) du code est manipulée, le calcul d'une donnée de contrôle locale (LCK(a)) associée à ladite donnée, à partir d'une part, de la donnée de contrôle globale associée au cadre de pile correspondant à la donnée manipulée et, d'autre part, d'au moins une partie des autres données constitutives dudit cadre de pile.

Fig.1

## Description

La présente invention concerne les logiciels et environnements d'exécution embarqués dans un appareil numérique et, en particulier, concerne un procédé de protection dynamique des données, notamment face aux attaques par faute, lors de l'exécution d'une application compilée en langage intermédiaire sur un appareil numérique muni d'une machine virtuelle d'exécution.

L'invention s'applique à tout type d'appareil numérique, portatif ou non, tel qu'un ordinateur mais aussi tout appareil doté d'un microcontrôleur réunissant un processeur et des mémoires, tel qu'une carte à puce.

La volonté de créer des applications inter opérables a conduit au développement des langages intermédiaires de programmation. Le but principal de ces langages est ainsi de rendre leurs logiciels indépendants du matériel sur lequel ils doivent être exécutés. Les logiciels sont alors prévus pour s'exécuter sous la forme d'un code intermédiaire indépendant de l'architecture sous-jacente.

Les programmeurs sont ainsi globalement dégagés des contraintes liées à des matériels spécifiques. Les langages intermédiaires tels que le pseudo-code Java (désigné par bytecode en langue anglaise), obtenu après compilation du langage source Java, ont ainsi connu un essor conséquent. On peut également citer le langage intermédiaire MSIL (acronyme anglo-saxon pour « Microsoft intermediate langage ») déployé dans le cadre de l'environnement Net ou DotNet (marque déposée), obtenu après compilation de divers langages sources possibles tels que C++ ou C#.

Le code intermédiaire correspond donc classiquement à une forme compilée du logiciel. Ces logiciels, compilés en Java, ou dans d'autres langages intermédiaires, tels que .Net, ne peuvent pas être exécutés tel quels par le processeur de l'appareil sur lequel on désire exécuter un programme compilé sous forme de code intermédiaire. Il est nécessaire d'introduire une couche logicielle ayant pour principale fonction d'interpréter le code intermédiaire en instructions exécutables par le processeur de l'appareil hôte. Cette couche logicielle est appelée « machine virtuelle ». Par exemple, la machine virtuelle JAVA permet l'exécution d'un logiciel Java sur une plate-forme donnée sur laquelle elle est implémentée.

Un logiciel Java est classiquement diffusé sous forme d'un ensemble de modules constitué de fichiers .class, correspondant à une forme compilée du logiciel. Chaque fichier compilé correspond à une structure de données de type classe et comprend en tant que telle les informations de cette classe : à savoir, la description des éléments de la classe (ses constantes, ses champs, ses méthodes), la description des éléments utilisés par la classe et définis dans d'autres classes (des champs et des méthodes), le code des méthodes de la classe sous forme d'instructions interprétables (pseudo-code) par l'interpréteur de la machine virtuelle Java.

De manière simplifiée, un fichier .class présente par exemple la structure suivante :

```
    ClassFile {
    Field_list ; //Description des champs de la
classe
    Method_list ; //Méthodes de cette classe
(incluant leur pseudo-code, c'est-à-dire leurs
instructions interprétables par l'interpréteur de la
machine virtuelle)
    }
```

Ainsi, à titre d'exemple, dans le cadre d'une application Java de porte monnaie électronique, on peut définir une classe nommée « Purse », avec son champ « balance » et sa méthode « decrementBalance() ». Le fichier .class pourrait présenter la structure suivante :

```
    Public class Purse {
    private int balance = 0 ;
    public void decrementBalance(){
        this.balance = this.balance - 1;
        }
    }
```

Ainsi, selon cet exemple, l'exécution de la méthode de la classe « Purse » consiste à retirer la valeur 1 à l'instance courante du champ balance.

L'exécution du logiciel Java correspondant est réalisée par la machine virtuelle Java installée sur l'appareil numérique.

Cette machine virtuelle transforme les informations du ClassFile en des structures de données en mémoire de travail qui sont propres à la machine virtuelle et qui permettent à cette machine virtuelle d'interpréter et d'exécuter le logiciel. Ces structures de données sont classiquement organisées sous forme de piles, dans lesquelles les données sont rangées les unes sur les autres dans l'ordre où elles arrivent.

La machine virtuelle dispose d'un jeu d'instructions propre, chaque instruction étant codée sur un ou plusieurs octets. Le jeu d'instructions de la machine virtuelle comporte par exemple un certain nombre d'instructions classiques comme les opérations arithmétiques, logiques et les sauts.

A l'heure actuelle, l'exécution d'une application par la machine virtuelle n'est pas entièrement sécurisée, notamment vis-à-vis des attaques en général et, en particulier, des attaques par faute. Ainsi, la valeur sensible dans l'exemple ci-dessus, représentée par le champ « balance », peut être modifiée suite à l'injection d'une faute lors de la manipulation de cette valeur pour l'interprétation de la méthode de mise à jour de ce champ par la machine virtuelle, conduisant à fixer une valeur finale dans la pile d'exécution pour le champ balance différente de celle normalement attendue. Par exemple, le champ balance peut être forcé à sa valeur maximale.

Une façon connue de lutter contre ce type d'attaques par faute consiste à ajouter une protection au niveau de l'application, sous la forme d'un code redondant de contrôle inséré au sein même du code de l'application devant être exécutée par la machine virtuelle.

Par exemple, pour protéger le code précédent, il est possible d'utiliser en Java, en tant que donnée de contrôle (« checksum » en langue anglaise), la valeur complémentée du champ balance, notée -balance, qui renvoie le complément à 1 de la valeur binaire de balance, et de mettre à jour cette valeur de donnée de contrôle en parallèle avec la mise à jour de la valeur balance lors de l'exécution de la méthode par la machine virtuelle. La comparaison du résultat des deux calculs de mise à jour menés en parallèle, d'une part pour le champ balance et, d'autre part, le champ complémenté -balance, permet alors de vérifier l'intégrité des données qui ont servi à établir les calculs. Le code java modifié en conséquence présente alors la structure suivante :

```
public class Purse {
private int balance = 0 ;
private int balChecsum = -balance; // = 0xFFFFFFFF

public void decrementBalance() {

   this.balance = this.balance - 1;
   this.balChecsum = this.balChecsum + 1;
   }
}
```

L'inconvénient d'une telle méthode de sécurisation de l'exécution du code Java est qu'elle est très consommatrice de ressources et de temps de calcul, ce qui est pénalisant dans les environnements contraints tels que les cartes à puce.

En outre, cette solution implique que les développeurs de code y soient sensibilisés et aient conscience, au moment du développement, de la façon de protéger les parties sensibles du code. Or, il est en réalité contraignant pour les développeurs de rajouter du code pour protéger leur application.

L'invention vise à résoudre un ou plusieurs de ces inconvénients.

L'invention a ainsi pour objet un procédé de protection des données d'une application compilée en code intermédiaire prévu pour s'exécuter sur un appareil numérique muni d'une machine virtuelle gérant l'exécution du code à travers une pile d'exécution définissant au moins un cadre de pile correspondant à une méthode appelée lors de l'exécution du code.

Selon l'invention, le procédé comprend l'application d'un mode d'exécution sécurisé du code, comprenant :

- la détermination d'au moins une donnée de contrôle globale associée à chaque cadre de pile et,
- à chaque fois qu'une donnée du code est manipulée, le calcul d'une donnée de contrôle locale associée à ladite donnée, à partir d'une part, de la donnée de contrôle globale associée au cadre de pile correspondant à la donnée manipulée et, d'autre part, d'au moins une partie des autres données constitutives dudit cadre de pile.

Selon un mode de réalisation particulier, le procédé comprend la décomposition de chaque cadre de pile en une pluralité de zones et la détermination d'une pluralité de données de contrôle globales respectivement associées à chaque zone du cadre de pile.

Selon ce mode de réalisation particulier, le calcul de la donnée de contrôle locale associée à la donnée manipulée comprend au préalable la détermination de la donnée de contrôle globale associée à la zone du cadre de pile où la donnée manipulée est stockée.

Avantageusement, le calcul de la donnée de contrôle locale associée à la donnée manipulée est effectué d'une part, à partir de la donnée de contrôle globale associée à la zone du cadre de pile où la donnée manipulée est stockée et, d'autre part, des autres données de ladite zone du cadre de pile.

De préférence, chaque cadre de pile est décomposé en deux zones, correspondant respectivement à une zone de variables locales de la méthode appelée et une zone de pile d'opérandes de ladite méthode.

Selon un mode de réalisation, le procédé est mis en oeuvre de façon logicielle.

Selon un autre mode de réalisation, le procédé est mis en oeuvre de façon matérielle.

L'invention concerne également une machine virtuelle d'exécution d'une application compilée en code intermédiaire sur un appareil numérique, caractérisé en ce qu'elle est susceptible d'être stockée dans une mémoire non volatile de l'appareil et susceptible de mettre en oeuvre le procédé selon l'invention.

L'invention concerne encore un appareil numérique comprenant une mémoire non volatile mémorisant la machine virtuelle selon l'invention.

D'autres particularités et avantages de l'invention apparaîtront clairement à la lecture de la description faite à titre d'exemple non limitatif et en regard des figures suivantes dans lesquelles :

- la figure 1 illustre la structure en mémoire d'un cadre de pile, au niveau duquel agit le mécanisme de protection selon la présente invention ;
- les figures 2a et 2b illustrent un premier exemple de réalisation de l'invention ;
- les figures 3a à 3d illustrent un second exemple de réalisation de l'invention ;
- les figures 4 à 6 illustrent des perfectionnements de l'invention, et
- la figure 7 illustre un exemple d'implémentation matérielle du procédé selon la présente invention.

L'invention vise donc à protéger l'exécution d'une application compilée en code intermédiaire sur un appareil numérique muni d'une machine virtuelle d'exécution pour l'interprétation du code de l'application.

Le mécanisme de protection selon la présente invention agit, comme on le verra plus en détail par la suite, au niveau du cadre de pile (« stack frame » selon la terminologie anglo-saxonne), représentant un bloc de mémoire réservée, dans la pile d'exécution de la machine virtuelle, lors de l'exécution d'une méthode du code.

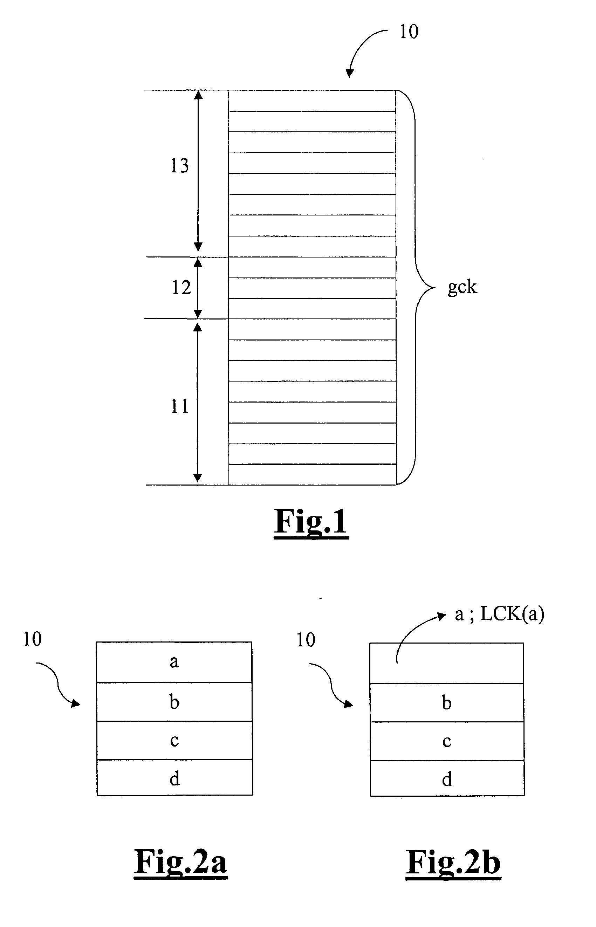

La figure 1 illustre la structure d'un tel cadre de pile 10, qui contient typiquement les paramètres de la méthode appelée, à savoir ses variables locales 11, sa pile d'opérandes 13, ainsi que des données système 12, comprenant notamment l'adresse de retour permettant de retrouver le cadre de pile précédent. En effet, il est courant qu'une première méthode, à laquelle est associé un premier cadre de pile, nécessite pour son exécution d'appeler elle-même une seconde méthode, à laquelle est associé un second cadre de pile. Dans ce cas, lorsque la première méthode est appelée, à un moment donné du déroulement de son exécution, la seconde méthode est appelée, impliquant de travailler dans le cadre de pile associé à cette seconde méthode. Lorsque les actions effectuées dans le cadre de pile associé à la seconde méthode sont terminées, les données système et plus particulièrement l'adresse de retour, du cadre de pile associé à la seconde méthode sont utilisées pour retrouver le cadre de pile précédent associé à la première méthode.

Le principe général de l'invention consiste donc à ajouter un mécanisme de sécurité au niveau de chaque cadre de pile de la machine virtuelle, avec l'objectif de pouvoir garantir à tout instant l'intégrité des données maintenues dans le cadre de pile associé pendant l'exécution d'une méthode.

Pour ce faire, à chaque cadre de pile de la machine virtuelle telle qu'illustré à la figure 1, est d'abord associée une donnée de contrôle globale gck. La valeur de donnée de contrôle globale gck est calculée en utilisant toutes les données du cadre de pile, à savoir tous les éléments constituant la pile d'opérandes 13 et toutes les variables locales 11.

Puis, chaque fois qu'une donnée d'un cadre de pile, i.e. un élément de la pile d'opérandes 13 ou des variables locales 11, est dépilée pour une opération quelconque, une donnée de contrôle locale associée peut alors être calculée dynamiquement, en utilisant d'une part, la donnée de contrôle globale associée au cadre de pile concerné, préalablement calculée et maintenue dans le cadre de pile et, d'autre part, les autres données du cadre de pile concerné.

Il conviendra, chaque fois qu'une donnée d'un cadre de pile est manipulée par la machine virtuelle d'exécution, de mettre à jour en conséquence la donnée de contrôle globale associée au cadre de pile.

Les principes généraux exposés ci-dessus sur lesquels repose l'invention vont maintenant être décrits plus en détail. Pour ce faire, sont d'abord données ci-après des définitions utiles à la description des fonctions de calcul des données de contrôle globales, associées à chaque cadre de pile, et locales, susceptibles d'être associées à chaque donnée d'un cadre de pile à partir de la donnée de contrôle globale associée.

En effet, aux fins de l'invention, il est nécessaire de définir deux types de fonction, dont l'une est prévue pour agir globalement sur un cadre de pile, tandis que l'autre permet de suivre localement les calculs exécutés par la machine virtuelle sur une ou des données, à partir notamment de la donnée de contrôle globale associée au cadre de pile correspondant aux données concernées. En utilisant une telle combinaison de fonctions, on verra qu'il est alors possible de garantir l'intégrité des données manipulées par la machine virtuelle à tout instant de l'exécution du code.

Soit V l'espace de valeurs sur des registres de longueur s. Par exemple, pour des registres de longueur 32 bits, on a :

$V= [-2147483648, 2147483647] = [-2^{31}, 2^{31}-1]$

On définit la fonction GCK de calcul de donnée de contrôle globale associée à un cadre de pile de la manière suivante :

```
GCK: V x V x ... x V ---------> V
     (S0, S1, ..., Sn-1) |------> GCK (S0, ..., Sn-1)
```

S0, S1, ..., Sn-1, étant l'ensemble des données constituant un cadre de pile donné.

La fonction LCK de calcul de donnée de contrôle locale associée à la donnée S0 est définie de la manière suivante :

```
LCK: V ----------> V
     S0 |--------> LCK(S0)
```

La fonction GCK doit posséder la propriété suivante :

Soient les fonctions GCK et LCK telles que définies ci-dessus, considérons toute fonction F telle que, pour tout ensemble de données (S0, ..., Sn-1) :

```
GCK(S0, S1, ..., Sn-1) = F(LCK(S0), ... , LCK(Sn-1))
```

A titre d'exemple, en utilisant l'opérateur de complément - appliqué à la somme de l'ensemble des éléments d'un cadre de pile donné, on définit :

```
GCK : V x V x ... x V ----------> V
      (S0, S1, ..., Sn-1) | -------> ~(S0 + ... + Sn-1)
LCK : V ------------> V
      S0 | ---------> ~S0
```

Soit la fonction F définie par :

```
F : V x V x ... x V -----> V
    (X0, X1, ..., Xn-1) |---> Sum (Xi, i=0, ..., n-1) + n-1
```

Alors :

$$GCK(S0, S1, \ldots , Sn-1) = \sim(S0 + \ldots + Sn-1) = \sim S0 + \ldots + \sim Sn-1 + n-1 = F(\sim S0, \ldots, \sim Sn-1) = F(LCK(S0), \ldots , LCK(Sn-1)).$$

De là, si on connaît la valeur gck de la donnée de contrôle globale associée à un cadre de pile (gck = GCK (S0, S1, ..., Sn-1)), il est facile alors de calculer la donnée de contrôle locale LCK(Si) associée à une donnée Si du cadre de pile accédée par la machine virtuelle, à partir de la valeur gck associée au cadre de pile concerné et des données restantes Sj du cadre de pile (j≠i), en utilisant l'opération suivante :

$$LCK(Si) = \sim Si = GCK(S0, S1, \ldots , Sn-1) - (\sim S0 + \ldots + \sim Si-1 + \sim Si+1 + \ldots + \sim Sn-1 + n-1)$$

~Si-1 + ~Si+1 + ... + ~Sn-1 + n-1)

Selon l'exemple, pour déterminer la donnée de contrôle locale associée à une donnée Si du cadre de pile, on retire donc à la valeur de donnée de contrôle globale gck, la somme complémentée des autres données constitutives du cadre de pile.

Ceci montre que la donnée de contrôle locale LCK(Si) associée à la donnée Si, peut être calculée sans utiliser explicitement la valeur de la donnée Si, mais en faisant intervenir uniquement la donnée de contrôle globale gck associé au cadre de pile correspondant à la donnée Si et les autres données du cadre de pile.

Cette propriété est particulièrement avantageuse dans l'optique de renforcer la sécurité de l'exécution des applications dans le contexte de l'invention. En effet, même si un attaquant est capable de modifier la valeur d'une donnée d'un cadre de pile au moment où cette dernière est lue par la machine virtuelle, la donnée de contrôle locale associée n'étant pas calculée en utilisant la valeur de la donnée en question, il sera alors possible de détecter que la donnée en question a été modifiée en la comparant avec la valeur issue de la donnée de contrôle.

Les figures 2a et 2b permettent d'illustrer plus précisément ce propos. Supposons que le contenu d'un cadre de pile 10 est décrit par l'empilement de cellules de la figure 2a, comprenant respectivement les données d, c, b et a empilées.

La donnée de contrôle globale gck associée à ce cadre de pile peut être calculée comme étant la somme complémentée des éléments du cadre de pile, en utilisant l'exemple de la fonction GCK donnée ci-dessus basée sur l'opérateur de complément - appliqué à la somme de l'ensemble des éléments du cadre de pile:

$$gck = \sim(a + b + c + d)$$

Supposons maintenant que la donnée a est dépilée du sommet du cadre de pile 10 comme illustré à la figure 2b et qu'au moment de cette opération, sa valeur est modifiée frauduleusement en a' par un moyen externe.

En appliquant les propriétés liées à l'opérateur ~, on a :

$$gck = \sim a + \sim b + \sim c + \sim d + 3$$

Comme déjà expliqué, la donnée de contrôle locale LCK(a) associée à la donnée courante a manipulée peut alors être calculée à partir de la donnée de contrôle globale gck et des données restantes dans le cadre de pile, de sorte qu'on obtient :

$$LCK(a) = gck - \sim(b + c + d) - 1 = \sim a$$

La donnée de contrôle locale LCK(a) peut par exemple être calculée si le système réclame une vérification de l'intégrité de la donnée a manipulée. Dans ce cas, la valeur de la donnée manipulée va être comparée à la valeur de donnée dérivée de la donnée de contrôle locale associée -a. Comme la donnée a, dans l'exemple, a été modifiée en a' suite à une attaque de l'extérieur, la comparaison avec la valeur obtenue de ~a indique donc au système qu'une erreur s'est produite, lui permettant alors de réagir.

Cette étape de vérification de l'intégrité peut être mise en oeuvre de façon optionnelle. Ainsi, on peut envisager de la différer, de l'effectuer à des instants prédéfinis ou même aléatoirement.

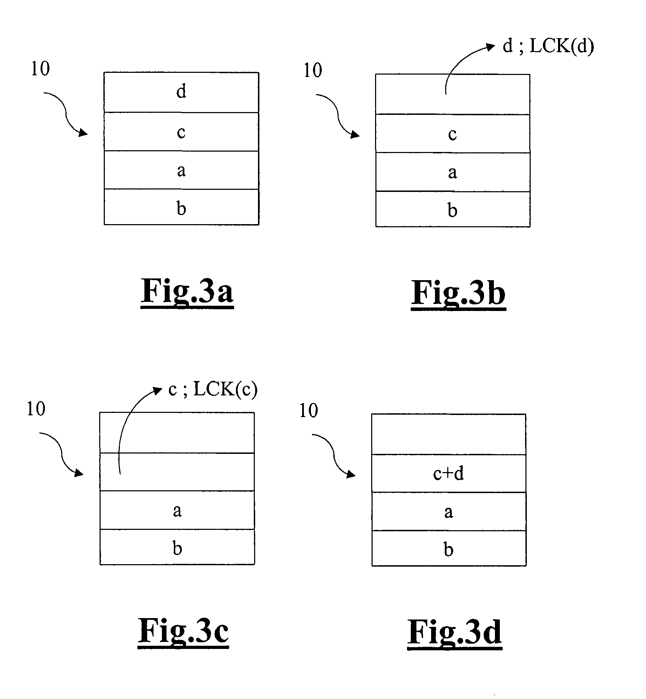

La machine virtuelle est également capable de garantir l'intégrité des données même pendant un calcul. Ce mécanisme est plus particulièrement illustré par l'exemple des figures 3a à 3d.

Supposons un cadre de pile 10, constitué par l'empilement des données b, a, c et d, comme illustré à la figure 3a. La donnée de contrôle globale associée au cadre de pile est calculée de la manière suivante :

$$gck = \sim(a + b + c + d)$$

Supposons que l'exécution de la méthode implique le calcul d + c. Le premier argument de l'addition constitué par la donnée d est donc d'abord dépilé et, en utilisant les principes ci-dessus, sa donnée de contrôle locale associée LCK(d) peut être calculée à partir de la donnée de contrôle globale gck associée au cadre de pile correspondant et des données restantes dans le cadre de pile :

$$LCK(d) = gck - \sim(b + a + c) - 1 = \sim d$$

Puis, la donnée de contrôle globale gck associée au cadre de pile est mise à jour avant de poursuivre l'opération de calcul, afin de refléter le nouvel état du cadre de pile, la donnée d ayant été dépilée. Pour ce faire, on retire à la valeur courante de la donnée de contrôle globale la valeur de la donnée de contrôle locale associée à la donnée d :

$$gck = gck - (\sim d) - 1 = \sim(a + b + c)$$

L'opération de calcul se poursuit alors et, comme illustré figure 3c, le second argument de l'addition constitué par la donnée c est maintenant dépilé. Toujours aux fins de vérifier l'intégrité des données utilisées dans le calcul en cours, la donnée de contrôle locale LCK(c) associée à la donnée c est calculée dynamiquement à partir de la donnée de contrôle globale gck précédemment mise à jour, à laquelle on retire la somme complémentée des données restantes dans le cadre de pile :

$$LCK(c) = gck - \sim(b + a) -1 = \sim c$$

De la même manière que précédemment, la donnée de contrôle globale associée au cadre de pile doit être mise à jour afin de refléter le nouvel état du cadre de pile, où la donnée c a été dépilée. On retire donc à la valeur courante de la donnée de contrôle globale la valeur de la donnée de contrôle locale associée à la donnée c :

$$gck = gck - (\sim c) - 1 = \sim(a + b)$$

A ce stade, les quatre données suivantes sont alors manipulées par la machine virtuelle : c, ~c, d et ~d, ce qui permet donc de contrôler que les données mises en jeu dans le calcul n'ont pas été modifiées au moment où elles sont lues, de la même manière qu'expliqué en référence avec l'exemple des figures 2a et 2b.
L'opération d'addition (c+d) est alors effectuée. L'intégrité de cette opération peut être contrôlée en utilisant les données de contrôle locales LCK(c) et LCK(d), associées respectivement aux données c et d. En effet, l'opération de contrôle correspondante ~(c+d) s'écrit : ~c + ~d + 1, selon les propriétés arithmétiques de l'opérateur de complément ~. Ainsi, on peut avantageusement calculer la donnée de contrôle locale LCK(c+d) associée au résultat de l'opération (c+d), sans avoir à utiliser directement les valeurs des données c et d, mais seulement en utilisant les données de contrôle locales LCK(c) et LCK(d) précédemment calculées et associées aux données intervenant dans l'opération. En outre, comme déjà vu, les données de contrôle locales LCK(c) et LCK(d) ont elles-mêmes été calculées à partir de la donnée de contrôle globale gck, sans avoir à utiliser les valeurs des données c et d.
Enfin, comme illustré à la figure 3d, une fois le calcul effectué, le résultat (c+d) est placé dans le cadre de pile 10. Il reste alors à mettre à jour la donnée de contrôle globale associée au cadre de pile, en utilisant la donnée de contrôle locale associée au résultat :

$$gck = gck+(\sim(c + d)+1) = \sim(a + b) + \sim(c + d) + 1$$
$$= \sim (a + b + c + d)$$

Dans les exemples ci-dessus, l'opérateur de complément - a été utilisé pour le calcul des données de contrôle locales. L'invention peut toutefois être généralisée en utilisant la généralisation suivante de l'opérateur ~ :
Soit 0 l'ensemble V, avec les opérations logiques et arithmétiques classiques suivantes (+, -, *, /, &, |).

Soit P l'ensemble V avec l'ensemble d'opérations symbolisées de la manière suivantes (✦,☒ ,⊙,♦,□,○).
On définit un opérateur de donnée de contrôle Chk de la manière suivante:
Chk : O -------------> P, de telle sorte que pour toute opération op dans l'ensemble (+,-,*,/,&,|), il existe une opération correspondante cop dans l'ensemble (✦,☒ ,⊙,♦,□,○) telle que:

$$Chk( a \; op \; b) = Chk(a) \; cop \; Chk(b)$$

L'opérateur ~ précédemment décrit du complément à 1 est donc un cas particulier de la fonction Chk :

$$\sim:\ (V,\ (+,-,*,/,\&,|))\ ----------\!\rightarrow\ (V,\ (\maltese\boxtimes\odot\blacklozenge\square\bigcirc))$$

$$a\ \ |------------------\!\rightarrow\ \ \sim a$$

avec

$$\sim(a\ +\ b\ )\ =\ \sim a\ \maltese\ \sim b\ \ =\ \sim a\ +\ \sim b\ +\ 1$$

Mathématiquement, l'opérateur Chk peut être défini comme un morphisme de groupe de l'espace O vers l'espace P, respectant l'ensemble des opérations dans P.

Le principe de l'invention consiste donc à associer à chaque cadre de pile de la machine virtuelle d'exécution une donnée de contrôle globale et, à chaque fois qu'une donnée est accédée, à calculer une donnée de contrôle locale associée à ladite donnée en utilisant la donnée de contrôle globale associée au cadre de pile concerné.

Dans les exemples de réalisation donnés ci-avant, le calcul de la donnée de contrôle globale associé à un cadre de pile consiste à calculer la somme complémentée de l'ensemble des éléments du cadre de pile. De plus, en mode sécurisé, chaque fois qu'une donnée du cadre de pile est accédée, sa donnée de contrôle associée est calculée, en utilisant la donnée de contrôle globale à laquelle est soustraite la somme complémentée des autres éléments du cadre de pile. Aussi, si la longueur du cadre de pile est conséquente, ces calculs peuvent s'avérer pénalisants en termes de performances (ralentissement de l'exécution du code en mode sécurisé) dans des environnements contraints en ressources de calcul.

Aussi, dans le but de diminuer le nombre d'opérations requises pour calculer une donnée de contrôle locale à partir d'une donnée de contrôle globale ou pour calculer la mise à jour de la donnée de contrôle globale, un perfectionnement de l'invention consiste à utiliser plusieurs données de contrôle globales associées à un même cadre de pile.

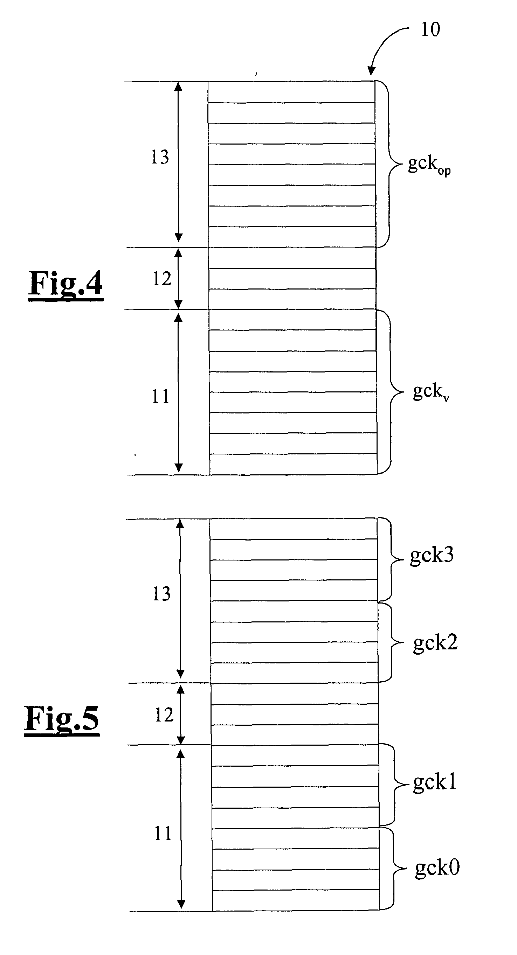

Selon une première variante illustrée à la figure 4, deux données de contrôle globales distinctes $gck_{op}$ et $gck_v$ sont utilisées pour chaque cadre de pile 10, respectivement associée à la pile d'opérandes 13 du cadre de pile et aux variables locales 11 du cadre de pile. Cela permet de diminuer conséquemment les calculs requis pour l'obtention d'une donnée de contrôle locale. En effet, si, par exemple, une donnée est manipulée à partir de la pile d'opérandes 13, sa donnée de contrôle locale associée pourra être obtenue à partir de la donnée de contrôle globale associée $gck_{op}$ et de la somme des seuls autres éléments de la pile d'opérandes et non du cadre de pile entier.

Selon une autre variante présentée à la figure 5, le cadre de pile est découpé en une pluralité de zones, à chacune desquelles est associée une donnée de contrôle globale. Les zones découpant le cadre de pile sont de préférence de longueur égale, mais il peut tout à fait être envisagé un découpage en zones de longueurs inégales. Selon l'exemple de la figure 5, la zone de variables locales 11 est découpée en deux zones de quatre éléments chacune, avec les données de contrôle globales associées gck0 et gck1, de même que la zone de pile d'opérandes est découpée en deux zones de quatre éléments chacune, avec les données de contrôle globales associées gck2 et gck3 respectivement.

Selon ce mode de réalisation, chaque fois qu'une donnée du cadre de pile est manipulée (lue ou ajoutée), il est d'abord nécessaire de déterminer quelle zone du cadre de pile est concernée, afin d'utiliser la donnée de contrôle globale associée à cette zone pour en déduire la donnée de contrôle locale associée à la donnée manipulée.

Chaque donnée de contrôle globale associée à une zone du cadre de pile est en fait identifiée par un indice (0 à 3 selon l'exemple de la figure 5). Aussi, pour déterminer la donnée de contrôle globale à utiliser, il faut pour cela déterminer l'indice permettant d'identifier la bonne donnée de contrôle globale. La détermination de l'indice peut être réalisée de la manière suivante :

$$indice\ =\ (jSP\ -\ base)/n$$

Où jSP représente le pointeur sur l'élément courant du cadre de pile, la base représente le pointeur sur la base du cadre de pile et n représente le nombre d'éléments d'une zone de longueur fixe du cadre de pile.

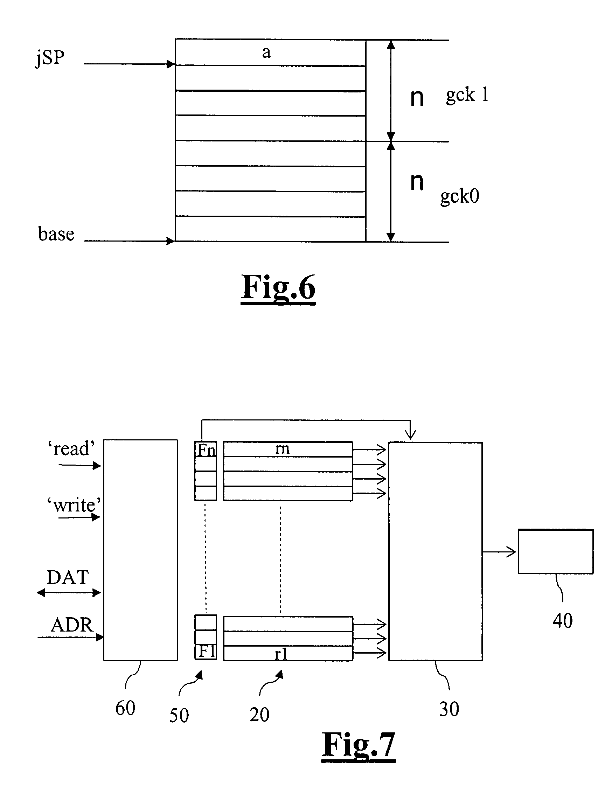

En référence à l'exemple de la figure 6 où on suppose que l'élément a est dépilé du cadre de pile représenté, découpé à titre d'exemple en deux zones de longueur n = 4, on obtient indice = 1, signifiant qu'il faut utiliser la donnée de contrôle globale gck1 pour la zone concernée.

Le calcul de la donnée de contrôle locale associée à la donnée a est alors réalisé comme expliqué précédemment, en utilisant la donnée de contrôle globale gck1 précédemment déterminé et en tenant avantageusement compte uniquement des données de la zone concernée, par opposition à toutes les données du cadre de pile.

Le calcul d'une donnée de contrôle locale répond à la formule suivante :

$$\texttt{LCK(a)} \quad = \quad \texttt{gck(indice)} \quad - \quad \sum_{i=base+n*indice}^{jSP} Si \quad ,$$

les Si symbolisant les éléments du cadre de pile.

Les calculs des données de contrôle globales et locales tels qu'ils ont été décrits peuvent être réalisés de manière logicielle. Toutefois, on a vu que lorsque les cadres de pile correspondant aux méthodes appelées lors de l'exécution du code sont d'une longueur conséquente, ces calculs peuvent s'avérer excessivement longs. La variante présentée ci-dessus, consistant à décomposer le cadre de pile en une pluralité de zones à chacune desquelles est associée une donnée de contrôle globale, permet alors avantageusement de réduire les temps de calcul.

Une autre solution repose sur une mise en oeuvre matérielle des calculs de données de contrôle selon l'invention. Un exemple d'implémentation matérielle est décrit à la figure 7. Selon cet exemple d'implémentation, une zone de mémoire 20, constituée d'un ensemble de registres r1 à rn, est connectée à une circuiterie logique 30, qui permet de calculer automatiquement une donnée de contrôle à partir du contenu des n registres la zone de mémoire 20 chaque fois qu'un de ces registres est mis à jour. Le résultat du calcul effectué par la circuiterie logique 30 est alors placé automatiquement dans un registre de contrôle 40 en tant que donnée de contrôle.

La circuiterie logique 30 est par exemple câblée de manière à exécuter la somme de l'ensemble des registres sélectionnés. La détermination automatique d'une donnée de contrôle via la logique câblée permet ainsi d'augmenter significativement la rapidité des calculs par rapport à une implémentation purement logicielle lorsque le nombre n est important.

L'ensemble des registres r1 à rn est donc utilisé comme une mémoire permettant d'empiler et de dépiler les données correspondantes d'un cadre de pile qui est mappé sur la zone de mémoire 20. Un ensemble F d'indicateurs F1 à Fn est en outre prévu, où chaque indicateur F1 à Fn est associé respectivement à un registre r1 à rn, permettant d'indiquer une mise à jour du cadre de pile. Par exemple, quand une donnée est placée sur la pile, le bit de l'indicateur correspondant est placé à 1 et quand une donnée est dépilée, le bit de l'indicateur correspondant est placé à 0. Ainsi, à chaque changement détecté dans l'ensemble d'indicateurs F, la donnée de contrôle est recalculée par l'intermédiaire de la circuiterie logique 30 à partir du contenu de tous les registres ri à rn dont le bit de l'indicateur correspondant est placé à 1.

L'ensemble matériel 20, 30, 40, 50 coopère avec un dispositif d'interface 60 connecté à une unité de traitement du composant sur lequel s'exécute le code. Des opérations d'ajout et de retrait de données sur un cadre de pile peuvent alors être effectuées, contrôlées via la configuration matérielle décrite.

Ainsi, l'ensemble des données d'un cadre de pile étant mappé dans la zone de mémoire 20, lorsqu'une donnée doit être retirée, la donnée de contrôle courante, dite CHK1, associée au cadre de pile est d'abord lue à partir du registre 40. Puis, un signal 'read' indiquant au dispositif d'interface 60 qu'une donnée est retirée, ce dernier commande la mise à jour des registres 20 et des indicateurs 50 sur la base de signaux d'adresses ADR et de donnée DAT reçus par l'unité de traitement et une valeur de donnée de contrôle mise à jour, dite CHK2, est automatiquement calculée et placée dans le registre de contrôle 40. Ainsi, à partir des données de contrôle CHK1 et CHK2 automatiquement calculées, le système peut déterminer la donnée de contrôle locale associée à la donnée retirée pour vérifier son intégrité.

De la même manière, lorsqu'une donnée doit être ajoutée à la pile, la donnée de contrôle courante, dite CHK1, associée au cadre de pile est d'abord lue à partir du registre 40. Un signal 'write' indique alors au dispositif d'interface 60 qu'une donnée est ajoutée, commandant ainsi la mise à jour des registres 20 et des indicateurs 50 sur la base de signaux d'adresses ADR et de donnée DAT reçus par l'unité de traitement. Une fois que la donnée a été chargée dans le registre correspondant de la zone de mémoire 20, la donnée de contrôle est automatiquement recalculée et la valeur mise à jour CHK2 est placée dans le registre de contrôle 40. Ainsi, à partir des données de contrôle CHK1 et CHK2 automatiquement calculées, le système peut déterminer la donnée de contrôle locale associée à la donnée ajoutée pour vérifier son intégrité.

**Revendications**

1.  Procédé de protection des données d'une application compilée en code intermédiaire prévu pour s'exécuter sur un appareil numérique muni d'une machine virtuelle gérant l'exécution du code à travers une pile d'exécution définissant au moins un cadre de pile (10) correspondant à une méthode appelée lors de l'exécution du code, **caractérisé en ce qu'**il comprend l'application d'un mode d'exécution sécurisé du code, comprenant :

    - la détermination d'au moins une donnée de contrôle globale (gck) associée à chaque cadre de pile et,
    - à chaque fois qu'une donnée (a) du code est manipulée, le calcul d'une donnée de contrôle locale (LCK(a)) associée à ladite donnée, à partir d'une part, de la donnée de contrôle globale associée au cadre de pile correspondant à la donnée manipulée et, d'autre part, d'au moins une partie des autres données constitutives dudit cadre de pile.

2.  Procédé selon la revendication 1, **caractérisé en ce qu'**il comprend la décomposition de chaque cadre de pile (10) en une pluralité de zones et la détermination d'une pluralité de données de contrôle globales (gck0, gck1, gck2, gck3) respectivement associées à chaque zone du cadre de pile.

3.  Procédé selon la revendication 2, **caractérisé en ce que** le calcul de la donnée de contrôle locale associée à la donnée manipulée comprend au préalable la détermination de la donnée de contrôle globale associée à la zone du cadre de pile où la donnée manipulée est stockée.

4.  Procédé selon la revendication 3, **caractérisé en ce que** le calcul de la donnée de contrôle locale associée à la donnée manipulée est effectué d'une part, à partir de la donnée de contrôle globale associée à la zone du cadre de pile où la donnée manipulée est stockée et, d'autre part, des autres données de ladite zone du cadre de pile.

5.  Procédé selon l'une quelconque des revendications 2 à 4, **caractérisé en ce que** chaque cadre de pile (10) est décomposé en deux zones, correspondant respectivement à une zone de variables locales (11) de la méthode appelée et une zone de pile d'opérandes (13) de ladite méthode.

6.  Procédé selon l'une quelconque des revendications précédentes, **caractérisé en ce qu'**il est mis en oeuvre de façon logicielle.

7.  Procédé selon l'une quelconque des revendications 1 à 5, **caractérisé en ce qu'**il est mis en oeuvre de façon matérielle.

8.  Machine virtuelle d'exécution d'une application compilée en code intermédiaire sur un appareil numérique, **caractérisé en ce qu'**elle est susceptible d'être stockée dans une mémoire non volatile de l'appareil et susceptible de mettre en oeuvre le procédé selon l'une quelconque des revendications précédentes.

9.  Appareil numérique comprenant une mémoire non volatile mémorisant la machine virtuelle selon la revendication 8.

10. Appareil selon la revendication 9, **caractérisé en ce qu'**il s'agit d'une carte à puce.

**Fig.1**

**Fig.2a**          **Fig.2b**

10

| d |
|---|
| c |
| a |
| b |

**<u>Fig.3a</u>**

d ; LCK(d)

10

| |
|---|
| c |
| a |
| b |

**<u>Fig.3b</u>**

c ; LCK(c)

10

| |
|---|
| |
| a |
| b |

**<u>Fig.3c</u>**

10

| |
|---|
| c+d |
| a |
| b |

**<u>Fig.3d</u>**

10

**Fig.4**

13

$gck_{op}$

12

11

$gck_v$

**Fig.5**

13

gck3

gck2

12

11

gck1

gck0

jSP →

a

n  gck 1

n  gck0

base →

## Fig.6

'read' →

'write' →

DAT ↔

ADR →

Fn    m

Fl    rl

60   50   20   30

40

## Fig.7

**Office européen
des brevets**

Numéro de la demande

EP 06 29 1183

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 01/88705 A (BULL CP8 [FR]; FOUGEROUX NICOLAS [FR]; LANDIER OLIVIER [FR]; HAMEAU PA) 22 novembre 2001 (2001-11-22)<br>* abrégé *<br>* page 1, ligne 1-3 *<br>* page 1, ligne 22-25 *<br>* page 2, ligne 4-17 *<br>* page 2, ligne 25 - page 3, ligne 3 *<br>* page 3, ligne 20 - page 4, ligne 18 *<br>* page 5, ligne 1-22 *<br>* page 6, ligne 1-3 *<br>* page 6, ligne 6 - page 7, ligne 8 *<br>* page 7, ligne 17 - page 8, ligne 2 *<br>* page 10, ligne 4-23 *<br>* revendications 1-9 *<br>----- | 1-10 | INV.<br>G06F9/445<br>G06F9/455 |
| X | WO 2005/101725 A (GEMPLUS CARD INT [FR]; CHEVALLIER-MAMES BENOIT [FR]; NACCACHE DAVID [F) 27 octobre 2005 (2005-10-27)<br>* abrégé *<br>* page 1, ligne 1-16 *<br>* page 2, ligne 20 - page 3, ligne 5 *<br>* page 3, ligne 21 - page 4, ligne 6 *<br>* page 5, ligne 14-28 *<br>* page 6, ligne 7-11 *<br>* page 6, ligne 14 - page 7, ligne 5 *<br>* page 9, ligne 17-21 *<br>* page 10, ligne 4 - page 11, ligne 22 *<br>* revendications 1-25 *<br>-----<br>-/-- | 1-10 | DOMAINES TECHNIQUES RECHERCHES (IPC)<br><br>G06F |

Le présent rapport a été établi pour toutes les revendications

| Lieu de la recherche | Date d'achèvement de la recherche | Examinateur |
|---|---|---|
| La Haye | 9 février 2007 | TOMAS BLANCH, F |

# EP 1 881 404 A1

**Office européen des brevets**

## RAPPORT DE RECHERCHE EUROPEENNE

**Numéro de la demande**

EP 06 29 1183

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GRIMAUD G ET AL: "FACADE: a typed intermediate language dedicated to smart cards" SOFTWARE ENGINEERING NOTES, ACM, NEW YORK, NY, US, vol. 24, no. 6, 6 septembre 1999 (1999-09-06), pages 476-493, XP002161892 ISSN: 0163-5948 * le document en entier * ----- | 1-10 | |
| A | INRIA: "VerifiCard at INRIA" INRIA, [Online] 19 septembre 2003 (2003-09-19), XP002418434 Extrait de l'Internet: URL:http://www-sop.inria.fr/lemme/verifica rd> [extrait le 2007-02-02] * le document en entier * ----- | 1-10 | |
| A | US 2003/226022 A1 (SCHMIDT RODNEY W [US] ET AL) 4 décembre 2003 (2003-12-04) * abrégé * ----- | 1-10 | **DOMAINES TECHNIQUES RECHERCHES (IPC)** |
| A | SIMON MOORE, ROSS ANDERSSON, ROBERT MULLINS, GEORGE TAYLOR, JACQUES J.A. FOURNIER: "Balanced self-checking asynchronous logic for smart card applications" SCIENCE DIRECT, [Online] 28 avril 2003 (2003-04-28), XP002418435 University of Cambridge Extrait de l'Internet: URL:www.cl.cam.ac.uk/~rdm34/jmm03.pdf> [extrait le 2007-02-01] * le document en entier * ----- | 1-10 | |

Le présent rapport a été établi pour toutes les revendications

| Lieu de la recherche | Date d'achèvement de la recherche | Examinateur |
|---|---|---|
| La Haye | 9 février 2007 | TOMAS BLANCH, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

**ANNEXE AU RAPPORT DE RECHERCHE EUROPEENNE
RELATIF A LA DEMANDE DE BREVET EUROPEEN NO.**

EP 06 29 1183

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-02-2007

| Document brevet cité au rapport de recherche | | Date de publication | Membre(s) de la famille de brevet(s) | | Date de publication |
|---|---|---|---|---|---|
| WO 0188705 | A | 22-11-2001 | AU | 6243701 A | 26-11-2001 |
| | | | CN | 1383505 A | 04-12-2002 |
| | | | EP | 1287432 A1 | 05-03-2003 |
| | | | FR | 2809200 A1 | 23-11-2001 |
| | | | JP | 2003533820 T | 11-11-2003 |
| | | | US | 2003028742 A1 | 06-02-2003 |
| WO 2005101725 | A | 27-10-2005 | EP | 1728354 A1 | 06-12-2006 |
| | | | FR | 2867929 A1 | 23-09-2005 |
| US 2003226022 | A1 | 04-12-2003 | AU | 2002361717 A1 | 19-12-2003 |
| | | | CN | 1628284 A | 15-06-2005 |
| | | | EP | 1509843 A1 | 02-03-2005 |
| | | | JP | 2005528690 T | 22-09-2005 |
| | | | WO | 03102770 A1 | 11-12-2003 |

EPO FORM P0460

Pour tout renseignement concernant cette annexe : voir Journal Officiel de l'Office européen des brevets, No.12/82